# EUROPEAN PATENT APPLICATION

(11) **EP 4 230 484 A1**
(43) Date of publication of application: **23.08.2023**
(21) Application number: 22158002.0
(22) Date of filing: 22.02.2022
(51) Int. Cl.: B60R 19/18

(54) **CRASH MANAGEMENT SYSTEM FOR A MOTOR VEHICLE**

(71) Applicant: Constellium Singen GmbH, 78224 Singen (DE)
(72) Inventor: FEUERSTEIN, Martin, 78224 SINGEN (DE); MUELLER, Andre, 78247 HILZINGEN (DE)
(74) Representative: Constellium - Propriété Industrielle

(57) **Abstract**

The invention relates to a crash management system (100) for a motor vehicle, the crash management system (100) having a cross member (10; 10a) for the connection to a body shell structure of the motor vehicle, the cross member (10; 10a) comprising a front flange (16), a rear flange (18) and two cross walls (20, 22) connecting the front flange (16) and the rear flange (18) for the formation of a closed cross section, and the crash management system (100) having two reinforcement areas (25) in the area of the rear flange (18) which extend at a distance from one another in the longitudinal direction of the cross member (10; 10a), which are disposed parallel to one another and which are disposed above and below a center plane (24) extending at least substantially parallel to the cross walls (20, 22), the reinforcement areas (25) projecting in the direction of the front flange (16), the two reinforcement areas (25) being formed by longitudinal ribs (26; 26a, 27; 27a) at least indirectly connected to the rear flange (18).

## Description

### FIELD OF THE INVENTION

The invention relates to a crash management system for a vehicle which is characterized by particularly advantageous properties, in particular in tests in which the vehicle collides with a pile-like obstacle, in which the cross member has a particularly high strength in the longitudinal direction.

### BACKGROUND

From US 2018/0105129 A1, a crash management system for a motor vehicle is known, which has a cross member which has three beads or embossments extending in the longitudinal direction of the cross member on the front facing away from the vehicle. In said areas, the material of the cross member is formed without machining, wherein, due to the approximately triangular or rectangular cross section of the beads or embossments, said beads or embossments act as reinforcement of the cross member. Two beads or embossments, each having an approximately V-shaped cross section, extend at a distance from one another above or below a center plane extending perpendicular in relation to a front flange and a rear flange of the cross member.

Furthermore, DE 10 2019 133 507 A1 discloses the embossing of recesses or beads in the area of a rear flange of a cross member of a crash management system, the recesses or beads ending in the axial direction in front of crash boxes by means of which the cross member can be fixed to a body shell structure of the motor vehicle. Furthermore, the known crash management system has a crash management component in the center of the cross member in the area of the rear flange, the crash management component, as a separate component, engaging around the cross member in a clamp-like manner. The crash management component is designed to cause specific buckling of the cross member in the case of an impact against a pile.

Moreover, DE 10 2019 101 718 A1 discloses the use of additional struts between the crash boxes and the cross member, in particular in electric vehicles, to improve the crash behavior against a pile-like obstacle, the additional struts connecting the crash boxes to the cross member on their outer sides facing away from one another.

### DESCRIPTION OF THE INVENTION

The advantage of the crash management system according to the invention for a motor vehicle having the features of claim 1 is that it prevents or delays a tearing apart of the cross member, in particular in connection with crash tests in which the cross member collides with a pile-like obstacle. Such a breaking apart of the cross member in the case of a collision is particularly critical in connection with electric vehicles in which there is typically no engine block or similar solid element in the area of the front to slow down or brake the movement of the obstacle in the direction of the passenger compartment.

In view of the foregoing, a crash management system according to the invention for a motor vehicle having the features of claim 1 provides that the crash management system has a cross member for the connection to a body shell structure of the motor vehicle, the cross member comprising a front flange, a rear flange and two cross walls connecting the front flange and the rear flange for the formation of a closed cross section, the front flange forming a front and the rear flange forming a back of the crash management system, and the crash management system having two reinforcement areas in the area of the rear flange which extend at a distance from one another in the longitudinal direction of the cross member, which are disposed parallel to one another and which are disposed above and below a center plane extending at least substantially parallel to the cross walls, the reinforcement areas projecting in the direction of the front flange, the two reinforcement areas being formed by longitudinal ribs at least indirectly connected to the rear flange and ending at a distance in front of the front flange, the rear flange being plane in the area of the longitudinal ribs, and the rear flange being at least substantially plane and free of reinforcement areas in the area between the two reinforcement areas in a direction extending perpendicular to the plane of the rear flange.

Surprisingly, the development and tests or simulations carried out have shown that such reinforcement ribs extending in the longitudinal direction in connection with an area free of reinforcements between the reinforcement ribs have particularly advantageous deformation properties or crash properties of the cross member; in particular, bursting or breaking apart of the cross member in the above-mentioned case of a collision with a pile-like obstacle is avoided or delayed. Particularly surprisingly, this has shown that additional reinforcements or the like on the rear flange in the area between the two reinforcement ribs worsen the strength properties of the cross member in the above-mentioned case of a crash.

Advantageous embodiments of the crash management system according to the invention for a motor vehicle are described in the dependent claims.

With respect to the position of the two longitudinal ribs extending in the longitudinal direction of the cross member, the first longitudinal rib is particularly advantageously disposed in a range between 15 % and 35 %, preferably between 20 % and 30 %, particularly preferably 25 %, in relation to the height of the rear flange, and the second longitudinal rib is particularly advantageously disposed in a range between 65 % and 85 %, preferably between 70 % and 80 %, particularly preferably 75 %, in relation to the height of the rear flange.

Furthermore, with respect to the crash properties, the two longitudinal ribs advantageously have at least substantially the same height in the direction of the cross walls and the height is advantageously between 10 % and 25 %, preferably between 15 % and 20 %, of the width of the cross walls. Advantageously, the longitudinal ribs are at least substantially parallel to the center plane.

With respect to the manufacturing of the cross member, such a cross member having longitudinal ribs can be produced in a particularly simple and advantageous manner if the cross member is formed as an extrusion component, the longitudinal ribs being formed monolithically with the rear flange.

In particular in connection with the formation of such a cross member as an extrusion component, the longitudinal ribs advantageously have an at least substantially rectangular cross section and a thickness which at least substantially corresponds to the thickness of the wall of the rear flange.

An alternative embodiment to a connection of the longitudinal ribs formed monolithically with the cross member can provide that the two longitudinal ribs are part of an insertion part which can be inserted into the cross section of the cross member, and that the longitudinal ribs are at least in indirect contact with the rear flange. Such an embodiment makes it possible, for example, to manufacture the insertion part from a different material than the cross member and/or to assign additional elements or functions to the insertion part, said elements or functions being easier to realize in a separate manufacturing of the insertion part. If an insertion part is used, it is also possible to manufacture the cross member not as an extrusion component, but in other ways known per se from the state of the art, for example as a rolled component, as a welded assembly or the like.

A first preferred embodiment of such an insertion part provides that the insertion part comprises a section having a closed cross section in the area of the longitudinal ribs, that the section is at least in contact with the rear flange and the cross walls, and that the insertion part is additionally in contact with the front flange. Such a design of the insertion part allows a clear positioning free of play of the insertion part in the cross section of the cross member.

Another preferred embodiment of such an insertion part provides that the section of the insertion part mentioned above is formed as a three-chamber profile, and that, at the level of one of the two longitudinal ribs, a support section extending diagonally and in the direction of the center plane extends from the outer side of the three-chamber profile facing the front flange in the direction of the front flange, the support section passing into a contact section extending parallel to the front flange.

A second alternative embodiment of the insertion part can provide that the insertion part comprises a plate on which the two longitudinal ribs are disposed, the longitudinal ribs projecting from the plate in the direction of the rear flange and being in contact with the rear flange.

Another preferred embodiment of such an insertion part also provides that the plate is parallel to the front flange and the rear flange, that the plate is at least approximately in contact with the cross walls, and that the plate is positioned in the cross section of the cross member by two positioning ribs formed on the cross walls in the direction of the cross walls.

In connection with a cross member in which the longitudinal ribs are formed monolithically on the cross member, the cross member is particularly preferably connected by means of two crash boxes which are spaced apart from one another in the longitudinal direction of the cross member, the longitudinal ribs extending over the entire length of the cross member. The manufacturing effort of the cross member is thus reduced, because no sections of the longitudinal ribs have to be removed (by machining). Optionally, it is possible that the longitudinal ribs are partially removed at the end face areas of the cross member, for example, in order to allow the arrangement of installation parts or the like in the cross member, for example.

In connection with the use of an insertion part for the longitudinal ribs, a preferred embodiment provides that the cross member is connected by means of two crash boxes which are spaced apart from one another in the longitudinal direction of the cross member, and that the insertion part extends at least into the area of the crash boxes and is connected there to the crash boxes for the fixation in the longitudinal direction. This is done against the background that the cross member is usually connected to the crash boxes in that fastening screws extending perpendicular to the longitudinal direction of the cross member are provided, said fastening screws allowing a fixation of the cross member to the crash boxes. Due to the provided minimum length of the insertion part up to the crash boxes, the fastening screws can thus also be used for the (axial) fixation of the insertion part in the cross section of the cross member. At the same time, the insertion part is then used for the additional stiffening of the cross member in the Z direction, i.e., perpendicular to the longitudinal direction of the cross member.

Additionally, it is mentioned that there are also design solutions in which the cross member is welded to the crash boxes. In this case, the insertion part can have a reduced length, the insertion part thus ending at a distance in front of the crash boxes. This results in lower material requirements and a lower weight of the insertion part. In this case, the length of the insertion part mainly depends on the guarantee of the intended crash properties.

Moreover, at least the insertion part, preferably also the cross member, is/are formed as extrusion component(s). With a view to a weight of the cross member that is as low as possible, the cross member is also made of an aluminum alloy.

Furthermore, the cross member can be at least partially curved in the longitudinal direction. With respect to the vehicle front, such a curvature allows an improvement of the stiffness or strength properties or adaptation of the shape of the cross member (bumper beam) to the intended shape of the vehicle body.

Further advantages, features and details of the invention are apparent from the following description of preferred embodiments of the invention and from the drawings.

### DESCRIPTION OF THE DRAWINGS

- Fig. 1: shows a perspective illustration of a crash management system for a motor vehicle,
- Fig. 2: shows a perspective sectional illustration of the crash management system of Fig. 1 in the area of the cross member in an embodiment in which the longitudinal ribs are formed monolithically with the cross members,
- Fig. 3: shows an illustration according to Fig. 2 in which the longitudinal ribs are part of a separate first insertion part which can be inserted into the cross section of the cross member,
- Fig. 4: shows an illustration according to Fig. 3 with a modified second insertion part compared to Fig. 3,
- Fig. 5 and Fig. 6: show an illustration of a crash test in a crash management system which has no longitudinal ribs or longitudinal ribs in the area of the center plane of the cross member, and
- Fig. 7 and Fig. 8: show an illustration according to Figs. 5 and 6 with a crash management system formed according to Figs 2 to 4.

### DETAILED DESCRIPTION OF THE INVENTION

In the figures, the same elements and elements having the same function are provided with the same reference numerals. These depicted embodiments are to be understood as illustrative of the invention and not as limiting in any way

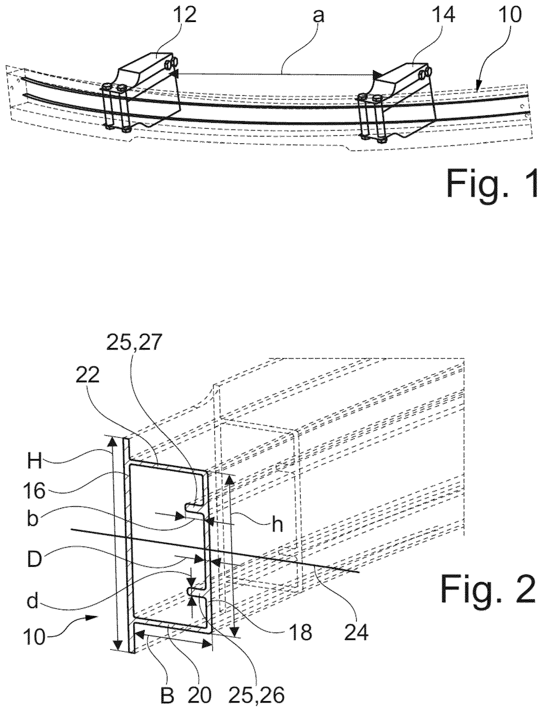

Fig. 1 shows a crash management system 100 for a motor vehicle, in particular for a passenger car. Crash management system 100 comprises a cross member 10 which is connected to a body shell structure (not shown) of the motor vehicle, in particular on side members of the motor vehicle, in a manner known per se by means of two crash boxes 12, 14. The two crash boxes 12, 14 are disposed at a distance a from one another, wherein cross member 10, as is known per se, can be at least partially curved in the longitudinal direction.

Fig. 2 shows the cross section of cross member 10 in detail. In particular, cross member 10 has a front flange 16 disposed on the side facing away from the vehicle front and a rear flange 18 disposed on the side facing the vehicle front. Front flange 16 forms the front and rear flange 18 forms the back of crash management system 100. Front flange 16 and rear flange 18 are connected to one another by means of two cross walls 20, 22 disposed perpendicular to front flange 16 and rear flange 18 and form a closed cavity or cross section of cross member 10. For example, front flange 16 has a greater height H than rear flange 18 whose height is h. Front flange 16 and rear flange 18 and transverse walls 20 and 22 are each formed as plane or flat walls. Moreover, cross member 10 is produced as a monolithic component in the extrusion process, preferably from aluminum or an aluminum alloy.

Rear flange 18 has a center plane 24 which extends parallel to the two cross walls 20, 22 in the middle of height h of rear flange 18. A reinforcement area 25 in the form of a longitudinal rib 26, 27 extending in the longitudinal direction of cross member 10 is disposed above and below center plane 24, respectively. The two longitudinal ribs 26, 27 are formed monolithically with cross member 10. In particular, the position of the two longitudinal ribs 26, 27 is such that first longitudinal rib 26 is disposed in a range between 15 % and 35 %, preferably between 20 % and 30 %, particularly preferably 25 %, in relation to height h of rear flange 18. Second longitudinal rib 27 is preferably disposed in a range between 65 % and 85 %, preferably between 70 % and 80 %, particularly preferably 75 %, in relation to height h of rear flange 18. Furthermore, longitudinal ribs 26, 27 projecting in the direction of front flange 18 and ending at a distance in front of front flange 18 are preferably disposed in such a manner that they project perpendicularly from rear flange 18 in the direction of front flange 16. However, depending on the application, it may also be conceivable if longitudinal ribs 26 and 27 are disposed at a (slight) oblique angle of 5° to 10°, for example, in relation to a perpendicular orientation to rear flange 18 (not shown). Outside the two longitudinal ribs 26, 27, rear flange 18 has a constant wall thickness.

Furthermore, the two longitudinal ribs 26, 27 have at least substantially the same height b in the direction of cross walls 20, 22, height b being between 10 % and 25 %, preferably between 15 % and 20 %, of width B of cross walls 20, 22. Thickness d of longitudinal ribs 26, 27 corresponds at least substantially to thickness D of the wall of rear flange 18. Additionally, it is mentioned that in the shown exemplary embodiment, thickness D of rear flange 18 is at least approximately identical to thickness d of front flange 16, for example for manufacturing reasons.

It is important for the required positive crash properties of cross member 10 that rear flange 18 is formed free of reinforcements in the area between the two longitudinal ribs 26, 27, i.e., that rear flange 18 has a plane shape or a plane cross section in this area, for example. In particular, rear flange 18 should not have any other longitudinal rib, deformations such as beads or similar reinforcement elements in the longitudinal direction in the area between the two longitudinal ribs 26, 27.

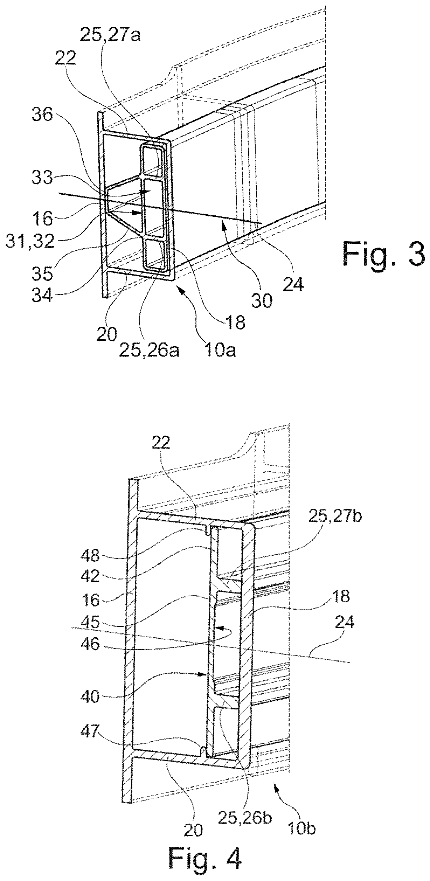

Fig. 3 shows a cross member 10a which differs from cross member 10 in that longitudinal ribs 26a, 27a are part of an insertion part 30 manufactured separately from cross member 10a. Insertion part 30 is preferably also formed as an extrusion component and is made of aluminum or an aluminum alloy. However, alternatively it is also possible to produce cross member 10a not as an extrusion component but in another manner known per se from the state of the art. Insertion part 30 has a first section 31 in the form of a closed profile, first section 31 being in particular formed as a three-chamber profile 32. Middle chamber 33 of three-chamber profile 32 is delimited by the two longitudinal ribs 26a, 27a. In the direction of front flange 16 and of center plane 24 of cross member 10a, a support section 35 extending at an oblique angle extends from a wall 34 of insertion part 30, support section 35 passing into a contact section 36 extending parallel to front flange 16 and contacting front flange 16.

The geometry or dimensioning of insertion part 30 is formed in such a manner that insertion part 30 is in contact with rear flange 18, front flange 16 and the two cross walls 20, 22 of cross member 10a. This ensures a clear positioning of insertion part 30 in the cross section of cross member 10a. To fix or position insertion part 30 in the cross section of cross member 10a, another proposition is to provide insertion part 30 with such an axial length that it projects at least into the area of the two crash boxes 12, 14 in order to be fixed there in the longitudinal direction by means of fastening screws which are also used for the fixation of cross member 10a to crash boxes 12, 14 (not shown).

Cross member 10b shown in Fig. 4 has an insertion part 40 which comprises a strip-shaped and substantially plane plate 42 which extends parallel to front flange 16 and to rear flange 18 and which is disposed at a distance from front flange 16. Longitudinal ribs 26b, 27b extend from plate 42 on the side facing rear flange 18, longitudinal ribs 26b, 27b being monolithically connected to plate 42 and being in contact with rear flange 18. Plate 42 has a plane front 45 on the side facing front flange 16. On the back facing rear flange 18, plate 42 is formed with reduced wall thickness in an area between the two longitudinal ribs 26b, 27b in a section 46 which ends in front of longitudinal ribs 26b, 27b. In the direction of front flange 16 or of rear flange 18, plate 42 has a height which at least approximately corresponds to the inner height of the cross section of cross member 10b, plate 42 thus being disposed between cross walls 20, 22 at least substantially free of play. Furthermore, front 45 of plate 42 rests against two positioning ribs 47, 48 formed on cross walls 20, 22 in order to position insertion part 40 free of play in the cross section of cross member 10b in the direction of cross walls 20, 22.

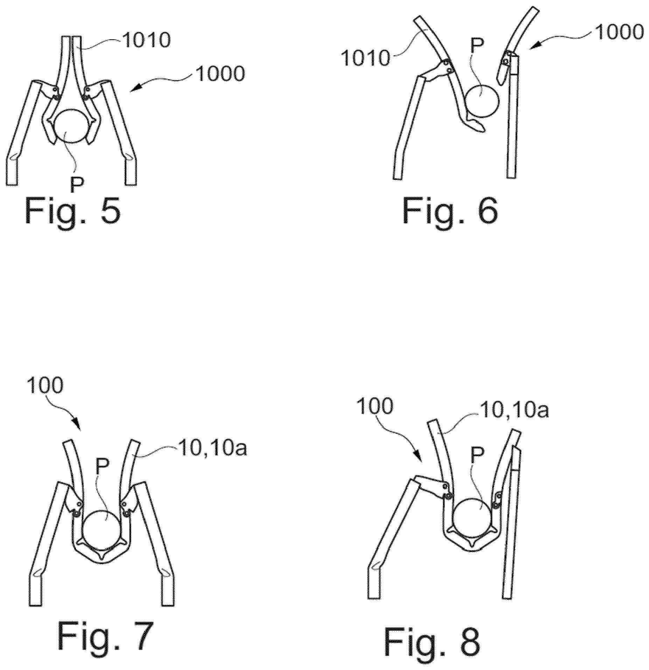

Fig. 5 shows how a conventional crash management system 1000, which does not have longitudinal ribs 26, 26a or 27, 27a, collides with a pile-like obstacle P in the case of a crash. The figure in particular shows that obstacle P in the center in relation to the longitudinal extension of cross member 1010 has the effect that cross member breaks apart centrally in the area of obstacle P at a certain impact speed. As a result, there is a risk that obstacle P penetrates further into the engine compartment of the motor vehicle or in the direction of the passenger compartment. It is also worth noting that the (bad) crash behavior shown in Fig. 5 is also achieved in a cross member 10, 10a if an additional reinforcement element, for example an additional (third) longitudinal rib at the level of center plane 24, is provided in the area between longitudinal ribs 26, 26a or 27, 27a.

Fig. 6 shows the crash behavior of crash management system 1000 in which obstacle P collides off center with crash management system 1000 ("offset crash"). This case also shows the same negative crash behavior of crash management system 1000 explained in connection with Fig. 5.

Moreover, Figs. 7 and 8 show how a crash management system 100 using a cross member 10, 10a, 10b designed according to the invention or by means of two longitudinal ribs 26, 26a, 26b or 27, 27a, 27b and an area free of reinforcements of rear flange 18 between longitudinal ribs 26, 26a, 26b or 27, 27a, 27b reacts under the same crash conditions as in the illustration of Figs. 5 and 6 in a central or off center crash with obstacle P. The figures in particular show that in these cases obstacle P does not cause cross member 10, 10a to tear apart in the area of obstacle P, but that cross member 10, 10a, 10b is merely deformed (buckled) several times, but is otherwise in one piece in the longitudinal direction.

Crash management system 100 as described above or cross members 10, 10a, 10b can be adapted or modified in many ways without departing from the idea of the invention.

For example, it is conceivable to form cross member 10, 10a, 10b as a steel component and longitudinal ribs 26, 26a, 26b or 27, 27a, 27b as components which are separate from cross member 10, 10a, 10b and which are connected to cross member 10, 10a, 10b in particular by welded joints between rear flange 18 and longitudinal ribs 26, 26a, 26b or 27, 27a, 27b. Longitudinal ribs 26, 26a, 26b or 27, 27a, 27b can also be formed on a profile which has an L cross section, for example, the profile being connected to rear flange 18 via its section extending at right angles to longitudinal ribs 26, 26a, 26b or 27, 27a, 27b, and the sections being disposed on the side of respective facing cross wall 20, 22.

### List of references:

- 10: cross member
- 10a, 10b: cross member
- 12, 14: crash box
- 16: front flange
- 18: rear flange
- 20, 22: cross wall
- 24: center plane
- 25: reinforcement area
- 26: first longitudinal rib
- 26a, 26b: first longitudinal rib
- 27: second longitudinal rib
- 27a, 27b: second longitudinal rib
- 30: insertion part
- 31: first section
- 32: three-chamber profile
- 33: middle chamber
- 34: wall
- 35: support section
- 36: support section
- 40: insertion part
- 42: plate
- 45: front
- 46: section
- 47: positioning rib
- 48: positioning rib

- 100: crash management system
- 1000: crash management system
- 1010: cross member

- a: distance
- b: height
- d: thickness
- h: height
- B: width
- D: thickness
- H: height
- P: obstacle

## Claims

1. A crash management system (100) for a motor vehicle, the crash management system (100) having a cross member (10; 10a; 10b) for the connection to a body shell structure of the motor vehicle, the cross member (10; 10a; 10b) comprising a front flange (16), a rear flange (18) and two cross walls (20, 22) connecting the front flange (16) and the rear flange (18) for the formation of a closed cross section, the front flange (16) forming a front and the rear flange (18) forming a back of the crash management system (100), and the crash management system (100) having two reinforcement areas (25) in the area of the rear flange (18) which extend at a distance from one another in the longitudinal direction of the cross member (10; 10a; 10b), which are disposed parallel to one another and which are disposed above and below a center plane (24) extending at least substantially parallel to the cross walls (20, 22), the reinforcement areas (25) projecting in the direction of the front flange (16), the two reinforcement areas (25) being formed by longitudinal ribs (26; 26a; 26b, 27; 27a; 27b) at least indirectly connected to the rear flange (18) and ending at a distance in front of the front flange (16), the rear flange (18) being plane in the area of the longitudinal ribs (26; 26a; 26b, 27; 27a; 27b), and the rear flange (18) being at least substantially plane and free of reinforcement areas in the area between the two reinforcement areas (25) in a direction extending perpendicular to the plane of the rear flange (18).

2. The crash management system according to claim 1,
**characterized in that**
the first longitudinal rib (26; 26a; 26b) is disposed in a range between 15 % and 35 %, preferably between 20 % and 30 %, particularly preferably 25 %, in relation to the height (h) of the rear flange (18), and the second longitudinal rib (27; 27a; 27b) is disposed in a range between 65 % and 85 %, preferably between 70 % and 80 %, particularly preferably 75 %, in relation to the height (h) of the rear flange (18).

3. The crash management system according to claim 1 or 2,
**characterized in that**
the two longitudinal ribs (26; 26a; 26b, 27; 27a; 27b) have at least substantially the same height (b) in the direction of the cross walls (20, 22), and **in that** the height (b) is between 10 % and 25 %, preferably between 15 % and 20 %, of the width (B) of the cross walls (20, 22).

4. The crash management system according to any one of claims 1 to 3,
**characterized in that**
the longitudinal ribs (26; 26a; 26b, 27; 27a; 27b) are at least substantially parallel to the center plane (24).

5. The crash management system according to any one of claims 1 to 4,
**characterized in that**
the longitudinal ribs (26; 26a; 26b, 27; 27a; 27b) have an at least substantially rectangular cross section and a thickness (d) which at least substantially corresponds to the thickness (D) of the wall of the rear flange (18).

6. The crash management system according to any one of claims 1 to 5,
**characterized in that**
the cross member (10) is formed as an extrusion component, and **in that** the longitudinal ribs (26, 27) are formed monolithically with the rear flange (18).

7. The crash management system according to any one of claims 1 to 4,
**characterized in that**
the two longitudinal ribs (26a; 26b, 27a; 27b) are part of an insertion part (30; 40) which can be inserted into the cross section of the cross member (10a; 10b), and **in that** the longitudinal ribs (26a; 26b, 27a; 27b) are at least in indirect contact with the rear flange (18).

8. The crash management system according to claim 7,
**characterized in that**
the insertion part (30) comprises a section (31) having a closed cross section in the area of the longitudinal ribs (26a, 27a), **in that** the section is at least in contact with the rear flange (18) and the cross walls (20, 22), and **in that** the insertion part (30) is additionally in contact with the front flange (16).

9. The crash management system according to claim 8,
**characterized in that**
the section (31) is formed as a three-chamber profile (32), and **in that**, at the level of one of the two longitudinal ribs (26a), a support section (35) extending diagonally and in the direction of the center plane (24) extends from the outer side of the three-chamber profile (32) facing the front flange in the direction of the front flange (16), the support section (35) passing into a contact section (36) extending parallel to the front flange (16).

10. The crash management system according to claim 7,
**characterized in that**
the insertion part (40) comprises a plate (42) on which the two longitudinal ribs (26b, 27b) are disposed, the longitudinal ribs (26b, 27b) projecting from the plate (42) in the direction of the rear flange (18) and being in contact with the rear flange (18).

11. The crash management system according to claim 10,
**characterized in that**
the plate (42) is parallel to the front flange (16) and the rear flange (18), **in that** the plate (42) is at least approximately in contact with the cross walls (20, 22), and **in that** the plate (42) is positioned in the cross section of the cross member (10b) by two positioning ribs (47, 48) formed on the cross walls (20, 22) in the direction of the cross walls (20, 22).

12. The crash management system according to any one of claims 7 to 11,
**characterized in that**
at least the insertion part (30; 40), preferably also the cross member (10; 10b), is/are formed as extrusion component(s).

13. The crash management system according to any one of claims 1 to 12,
**characterized in that**
the cross member (10; 10a; 10b) is made of an aluminum alloy.

14. The crash management system according to any one of claims 7 to 13,
**characterized in that**
the cross member (10a; 10b) is connected by means of two crash boxes (12, 14) which are spaced apart from one another in the longitudinal direction of the cross member (10a; 10b), and **in that** the insertion part (30; 40) extends at least into the area of the crash boxes (12, 14) and is connected there to the crash boxes (12, 14) for the fixation in the longitudinal direction.

15. The crash management system according to any one of claims 1 to 14,
**characterized in that**
the cross member (10; 10a; 10b) is at least partially curved in the longitudinal direction.
